# EUROPÄISCHE PATENTANMELDUNG

(11) **EP 1 083 410 A2**
(43) Veröffentlichungstag der Anmeldung: **14.03.2001**
(21) Anmeldenummer: 00119091.7
(22) Anmeldetag: 02.09.2000
(51) Int. Cl.: G01D 7/00

(54) **Vorrichtung zum Anzeigen eines Messwertes**

(30) Priorität: 07.09.1999 DE 19942598
(71) Anmelder: Mannesmann VDO Aktiengesellschaft, 60388 Frankfurt am Main (DE)
(72) Erfinder: Busch, Johannes, Ing., 78056 Villingen-Schwenningen (DE); Wiesbaum, Stefan, Ing., 78050 Villingen-Schwenningen (DE)

(57) **Zusammenfassung**

Es wird vorgeschlagen, eine Vorrichtung zum Anzeigen eines Meßwertes, bei der der Meßwert auf einer von einer elektronischen Steuerung (4) steuerbaren Anzeigetafel (1) numerisch oder in Verbindung mit einer Skala (2) und einem beweglichen Zeiger (3) angezeigt wird, so auszubilden, daß die Steuerung (4) das optische Erscheinungsbild der Anzeigetafel (1) auffällig verändert, sobald der Meßwert einen in der Steuerung (4) voreingestellten Grenzwert überschreitet.

## Beschreibung

Die Erfindung betrifft eine Vorrichtung zum Anzeigen eines Meßwertes gemäß dem Oberbegriff des ersten Anspruchs. Eine bevorzugte Anwendung ist bei Anzeigeinstrumenten für Kraftfahrzeuge gegeben.

Gattungsgemäße Vorrichtungen zum Anzeigen eines Meßwertes sind von ihrem Aufbau hinlänglich bekannt. Sie sind entweder als analog anzeigende Vorrichtungen mit einer Skala und einem beweglichen Zeiger ausgebildet oder der Meßwert wird in einer digitalen Anzeige als Zahlenwert numerisch angezeigt. In beiden Fällen erscheint die Skala samt Zeiger oder die numerische Anzeige vor dem Hintergrund einer meist einfarbig gestalteten Anzeigetafel, die in ihrem Erscheinungsbild unveränderbar ausgebildet ist.

Bei vielen Anwendungen für Vorrichtungen zum Anzeigen eines Meßwertes ist es wünschenswert, mitunter sogar erforderlich, anzuzeigen, sobald der Meßwert einen voreingestellten Grenzwert überschreitet, weil oberhalb dieses Grenzwertes ein Gefahrenpotential besteht, das es durch eine Einflußnahme auf die den Meßwert generierende Einrichtung abzuwenden oder zumindest zu verringern gilt. Falls beispielsweise die Vorrichtung zum Anzeigen eines Meßwertes als ein Drehzahlmesser ausgebildet ist und der Motor, dessen Drehzahl erfaßt und angezeigt wird, mit seiner Drehzahl einen bestimmten Grenzwert überschreitet, sollte die Betriebsweise des Motors unverzüglich geändert werden, um am Motor keinen Schaden zu verursachen. Derartige Warnungen werden herkömmlicherweise durch Kontrolleuchten ausgegeben, die unabhängig und baulich getrennt von einer gattungsgemäßen Vorrichtung zum Anzeigen eines Meßwertes betrieben werden.

Es ist nun die Aufgabe der vorliegenden Erfindung, eine Vorrichtung zum Anzeigen eines Meßwertes aufzuzeigen, die ohne Verwendung einer zusätzlichen Kontrolleuchte in augenfälliger Weise eine Warnung anzeigt, sobald der Meßwert einen voreingestellten Grenzwert überschreitet.

Die Aufgabe wird durch eine Vorrichtung zum Anzeigen eines Meßwertes gelöst, die die Merkmale des ersten Anspruchs aufweist. Dabei zeichnet sich die gefundene Lösung dadurch aus, daß bei einer von einer elektronischen Steuerung betriebenen Vorrichtung zum Anzeigen eines Meßwertes die Steuerung vorzugsweise flächenhaft das optische Erscheinungsbild der gesamten Anzeigetafel auffällig verändert, sobald der Meßwert einen in der Steuerung voreingestellten Grenzwert überschreitet. Die abhängigen Ansprüche beinhalten Merkmale zur Ausgestaltung und Weiterbildung der gefundenen Lösung.

Der Vorteil der gefundenen Lösung besteht darin, daß die Anzeige der Überschreitung eines Grenzwertes für den Meßwert in äußerst augenfälliger Weise erfolgt und daß für die Ausgabe der Warnung eine von der Vorrichtung zum Anzeigen eines Meßwertes unabhängig und baulich getrennt betriebene Kontrolleuchte nicht erforderlich ist, was sich auf Grund der Einsparung von Bauteilen und Bauraum kostengünstig auswirkt.

In Verbindung mit vier Figuren soll die gefundene Lösung am Beispiel eines Anzeigeinstrumentes für die Fahrzeuggeschwindigkeit erläutert werden. Es zeigen:
- Figur 1: die Darstellung eines analogen Anzeigeinstrumentes vor Überschreiten eines voreingestellten Grenzwertes für die Fahrzeuggeschwindigkeit;
- Figur 2: die Darstellung des analogen Anzeigeinstrumentes der Figur 1 ab Überschreiten eines voreingestellten Grenzwertes für die Fahrzeuggeschwindigkeit;
- Figur 3: die Darstellung eines digitalen Anzeigeinstrumentes vor Überschreiten eines voreingestellten Grenzwertes für die Fahrzeuggeschwindigkeit;

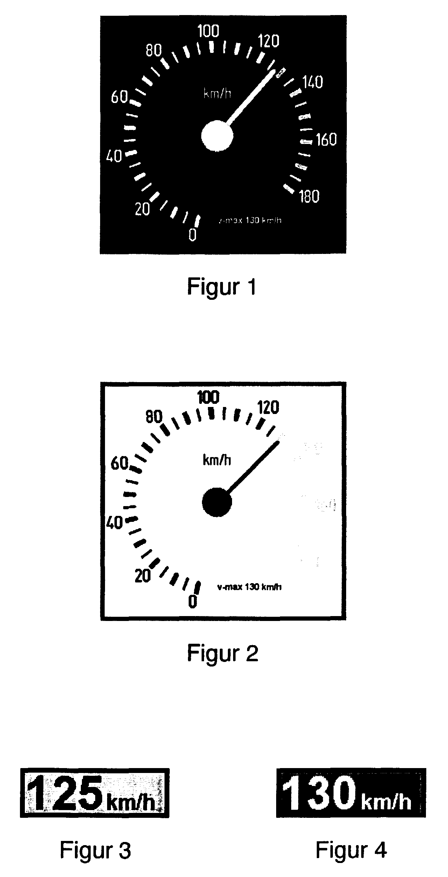

- Figur 2: die Darstellung des digitalen Anzeigeinstrumentes der Figur 3 ab Überschreiten eines voreingestellten Grenzwertes für die Fahrzeuggeschwindigkeit.

Bei dem in der **Figur 1** dargestellten Anzeigeinstrument kann es sich zum Beispiel um ein Drehspulinstrument mit einer Skala 2 und einem von einem Meßwerk angetriebenen Zeiger 3 handeln, wobei das Meßwerk seinerseits von einer nicht dargestellten elektronischen Steuerung 4 gesteuert wird. Die Skala 2 und der Zeiger 3 befinden sich auf einer dem Betrachter zugewandten Anzeigetafel 1, so daß die Anzeigetafel 1 die Hintergrundfläche für die Skala 2 und den Zeiger 3 bildet. Die Anzeigetafel 1 ist hier zum Beispiel zumindest teiltransparent und mit einer Hinterleuchtung ausgestattet. Sie erscheint jedoch dunkel, solange der Meßwert, welcher in diesem Beispiel die Fahrzeuggeschwindigkeit ist, einen in der Steuerung 4 voreingestellten Grenzwert von beispielsweise 130 km/h nicht überschreitet. Sobald jedoch dieser Grenzwert überschritten wird, wird die gesamte Anzeigetafel 1 gemäß der Darstellung in der **Figur 2** flächenhaft hell erleuchtet. Auf diese Weise verändert die Steuerung 4 das optische Erscheinungsbild der Anzeigetafel 1 auffällig, sobald der Meßwert einen in der Steuerung 4 voreingestellten Grenzwert überschreitet. Natürlich könnte die Steuerung 4 auch für die Anzeigetafel 1 einen Farbumschlag von beispielsweise grün auf rot veranlassen, sobald die Fahrzeuggeschwindigkeit den in der Steuerung 4 voreingestellten Grenzwert von beispielsweise 130 km/h überschreitet. Es mag auch ausreichen, diesen Farbwechsel der Anzeigetafel 1 nur in Teilbereichen, zum Beispiel in ihrem Kernbereich innerhalb der Skala 2 zu vollziehen, sofern die Anzeigetafel 1 zumindest in diesem Teilbereich transparent ausgebildet und hinterleuchtet ist.

Die **Figuren 3 und 4** zeigen die Darstellung eines digitalen Anzeigeinstrumentes, bei dem die für den Meßwert beispielhaft gewählte Fahrzeuggeschwindigkeit mit einer dem aktuellen Meßwert entsprechenden Maßzahl und der Maßeinheit km/h numerisch angezeigt wird. Beim Überschreiten des Grenzwert von beispielsweise 130 km/h, der in einer elektronischen Steuerung 4 voreingestellt ist, die aber in diesen Figuren nicht dargestellt ist, verändert die Anzeigetafel 1 ihr Erscheinungsbild in auffälliger Weise, indem die Steuerung 4 die Hintergrundfarbe und/oder die Ziffernfarbe für die numerische Anzeige ändert.

Für den Fall, daß die Anzeigetafel 1 als ein LC-Display ausgebildet ist, kann die Steuerung 4 ein erstes in der Steuerung 4 hinterlegtes Bildmuster für die Anzeigetafel 1 gegen ein zweites, vom ersten verschiedenes Bildmuster austauschen, um die Farbe der Anzeigetafel 1, der Skala 2, des Zeigers 3 oder die Farbe der numerischen Anzeige beim Überschreiten des in der Steuerung 4 voreingestellten Grenzwertes zu ändern. Diese Ausgestaltung der Lösung ist mit einer elektronischen Steuerung 4, vorzugsweise mit einer Steuerung durch einen Mikrocontroller, programmtechnisch auf einfache Weise ausführbar und eignet sich sowohl für analoge Anzeigen mit einer auf der Anzeigetafel 1 grafisch dargestellten Skala 2 und einem ebenso grafisch dargestellten Zeiger 3 als auch für rein digitale Anzeigen. Sofern Speicherplatz für die in der Steuerung 4 hinterlegten Bildmuster eingespart werden muß, mag es ausreichen, daß die Steuerung 4 durch einen Austausch von in ihr hinterlegten Bildmustern allein die Farbe der numerisch oder durch die Skala 2 und den Zeiger 3 erfolgten Meßwertdarstellung auffällig verändert, ohne den durch die Anzeigetafel 1 gebildeten Hintergrund zu verändern. Eine weitere Speicherplatzreduktion für die Hinterlegung der Bildmuster könnte dadurch erfolgen, daß die Steuerung 4 nur in Teilbereichen einen Wechsel der Farbe der numerisch oder durch die Skala 2 und den Zeiger 3 erfolgten Meßwertdarstellung veranlaßt, sobald der Meßwert einen in der Steuerung 4 voreingestellten Grenzwert überschreitet.

Eine Weiterbildung der gefundenen Lösung besteht darin, daß die Steuerung 4 die Anzeigetafel 1 oder die numerisch oder die durch die Skala 2 und den Zeiger 3 erfolgte Meßwertdarstellung aufblinken läßt. Diese Maßnahme kann zusätzlich zu einem Farbwechsel bei der Anzeigetafel 1, der Skala 2, des Zeigers 3 oder der numerischen Anzeige ergriffen werden. Ebenso kann die Steuerung 4 so ausgebildet sein, daß sie das Erscheinungsbild der Anzeigetafel 1 kontinuierlich in dem Maße verändert, wie das durch die Überschreitung des Grenzwertes angezeigte Gefahrenpotential zunimmt.

Die Erfindung ist nicht auf die namentlich erwähnten Beispiele beschränkt, sondern kann bei allen analogen und digitalen Vorrichtungen zum Anzeigen eines Meßwertes unterschiedlicher Bauart Anwendung finden. Die Erfindung besteht dann, beim Überschreiten eines voreingestellten Grenzwertes für den anzuzeigenden Meßwert das gesamte optische Erscheinungsbild der für einen Betrachter wahrnehmbaren Anzeige auffällig zu verändern, so daß die auf diese Weise abgesetzte Warnung nicht durch eine von der Vorrichtung zum Anzeigen eines Meßwertes unabhängig und baulich getrennt betriebene Kontrolleuchte angezeigt wird, sondern vorzugsweise flächenhaft durch eine optisch auffällige Veränderung der Anzeigetafel 1 oder der anhand einer Skala 2 zusammen mit einem Zeiger 3 oder in numerischer Weise erfolgten Meßwertdarstellung.

## Patentansprüche

1. Vorrichtung zum Anzeigen eines Meßwertes, wobei der Meßwert auf einer von einer elektronischen Steuerung (4) steuerbaren Anzeigetafel (1) numerisch oder in Verbindung mit einer Skala (2) und einem beweglichen Zeiger (3) angezeigt wird,
**dadurch gekennzeichnet,**
daß die Steuerung (4) das optische Erscheinungsbild der Anzeigetafel (1) auffällig verändert, sobald der Meßwert einen in der Steuerung (4) voreingestellten Grenzwert überschreitet.

2. Vorrichtung nach Anspruch 1,
**dadurch gekennzeichnet,**
daß die Steuerung (4) die Anzeigetafel (1) farblich verändert.

3. Vorrichtung nach einem der vorangegangenen Ansprüche,
**dadurch gekennzeichnet,**
daß die Steuerung in dem Fall, daß die Anzeigetafel (1) zumindest in Teilbereichen transparent ausgebildet und hinterleuchtet ist, die Hinterleuchtung der Anzeigetafel (1) farblich verändert.

4. Vorrichtung nach einem der vorangegangenen Ansprüche,
**dadurch gekennzeichnet,**
daß die Steuerung (4) in dem Fall, daß die Anzeigetafel (1) als ein LC-Display ausgebildet ist, ein erstes in der Steuerung (4) hinterlegtes Bildmuster für die Anzeigetafel (1), für eine grafisch dargestellte Skala (2), für einen grafisch dargestellten Zeiger (3) oder für eine numerische Anzeige gegen ein zweites, vom ersten verschiedenes Bildmuster austauscht, sobald der Meßwert einen in der Steuerung (4) voreingestellten Grenzwert überschreitet.

5. Vorrichtung nach einem der vorangegangenen Ansprüche,
**dadurch gekennzeichnet,**
daß die Steuerung (4) unter Beibehaltung der Farbe für die Anzeigetafel (1) die Farbe der numerisch oder durch die Skala (2) und den Zeiger (3) erfolgten Meßwertdarstellung auffällig verändert, sobald der Meßwert einen in der Steuerung (4) voreingestellten Grenzwert überschreitet.

6. Vorrichtung nach einem der vorangegangenen Ansprüche,
**dadurch gekennzeichnet,**
daß die Steuerung (4) zumindest in Teilbereichen einen Wechsel der Farbe der numerisch oder durch die Skala (2) und den Zeiger (3) erfolgten Meßwertdarstellung veranlaßt.

7. Vorrichtung nach einem der vorangegangenen Ansprüche,
**dadurch gekennzeichnet,**
daß die Steuerung (4) die Anzeigetafel (1) oder die numerisch oder die durch die Skala (2) und den Zeiger (3) erfolgte Meßwertdarstellung aufblinken läßt.

8. Vorrichtung nach einem der vorangegangenen Ansprüche,
**dadurch gekennzeichnet,**
daß die Steuerung (4) das Erscheinungsbild der Anzeigetafel (1) kontinuierlich in dem Maße verändert, wie das durch die Überschreitung des Grenzwertes angezeigte Gefahrenpotential zunimmt.
